(19) Europäisches Patentamt
European Patent Office
Office européen des brevets

(11) Publication number : **0 620 077 A1**

(12) # EUROPEAN PATENT APPLICATION

(21) Application number : **94301816.8**

(22) Date of filing : **15.03.94**

(51) Int. Cl.[5] : **B23K 35/363,** B23K 1/08, // B23K101/42

(30) Priority : **07.04.93 GB 9307341**

(43) Date of publication of application : **19.10.94 Bulletin 94/42**

(84) Designated Contracting States : **BE DE FR GB NL**

(71) Applicant : **MULTICORE SOLDERS LIMITED**
**Kelsey House**
**Wood Lane End**
**Hemel Hempstead Hertfordshire HB2 4RQ (GB)**

(72) Inventor : **Warwick, Malcolm Eric**
**86 Hivings Hill**
**Chesham, Buckinghamshire HP5 2PG (US)**
Inventor : **Lawrence, Frank Timothy**
**9 Loudwater Close**
**Sunbury on Thames, Middlesex TW16 6DD (US)**

(74) Representative : **Silverman, Warren et al**
**HASELTINE LAKE & CO.**
**Hazlitt House**
**28 Southampton Buildings**
**Chancery Lane**
**London WC2A 1AT (GB)**

(54) **Soldering flux and its use in inert gas wave soldering.**

(57) The soldering of electronic components to a printed circuit board on which they are mounted by means of wave soldering in an inert gas atmosphere is carried out using a soldering flux which contains a carboxylic acid which melts at a temperature in the range of from 75 to 250°C, preferably 110 to 200°C and which thermally decomposes and/or volatilises at wave soldering temperatures of 230 to 260°C, to leave neutral residues, the carboxylic acid having low water solubility and being selected from

(i) α-unsaturated carboxylic acids of general formula :

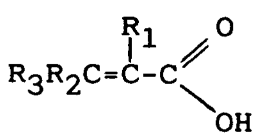

(ii) carboxylic acids containing conjugated double bonds and of general formula :

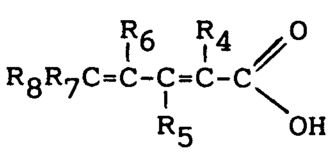

and (iii) aromatic carboxylic acids of general formula :

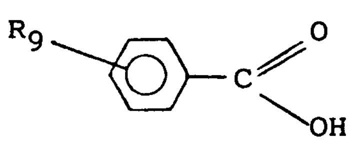

wherein $R_1$, $R_2$, $R_3$, $R_4$, $R_5$, $R_6$, $R_7$, $R_5$ and $R_9$ denote H, alkyl, cycloalkyl, heterocyclic, aryl, heterocyclic aromatic, $OR_{10}$, $NR_{11}R_{12}$, or $CO_2R_{13}$ wherein $R_{10}$, $R_{11}$, $R_{12}$ and $R_{13}$ independently of one another are H, alkyl, cycloalkyl, heterocyclic, aryl or heterocyclic aromatic.

EP 0 620 077 A1

Jouve, 18, rue Saint-Denis, 75001 PARIS

This invention relates to the soldering of electronic components and is principally concerned with the soldering of such components, when mounted on a printed circuit board (PCB), by means of wave soldering in an inert gas atmosphere.

One commercially popular method of mass producing PCB's involves the use of a wave soldering machine in which a molten solder wave is caused to come into contact with a PCB carrying electronic components as it passes through the machine so as to cause the components to become soldered to the PCB in the required locations after the PCB has emerged from the solder wave and the solder has solidified. Conventionally, wave soldering has been effected under an oxygen-containing atmosphere, that is air, using a solder alloy which is a tin-lead eutectic, i.e. a 63:37 Sn/Pb alloy, or a close alloy thereto, e.g. a 60:40 Sn/Pb. To ensure adequate wetting and bonding of the solder on the PCB, it is normally necessary to apply a flux material to the PCB which contains components for achieving both such objectives and results in the formation of flux residues which may then need to be removed, generally by cleaning with an organic solvent such as chlorofluorocarbon (CFC) which gives rise to environmental problems.

When wave soldering is conducted in air, oxide which is formed on the solder wave intermixes with solder to form dross which must be removed periodically from the solder bath. In order to avoid such dross formation and in order to reduce the need for employing a flux material of conventional type which produces flux residues in the wave soldering process, wave soldering of PCB's has recently been conducted in a non-oxidising atmosphere (generally < 10ppm oxygen), such as an inert gas, e.g. nitrogen (see "Inert Atmosphere Wave Soldering", Electronic Production, May 1991, pp 11-12.

The low solids liquid fluxes which do not require cleaning off with for example CFC's used in inert gas wave soldering, as with liquid fluxes, generally, contain carboxylic acid activators dissolved in a solvent selected from low molecular weight alcohols. The formulation optionally contains a resin, a corrosion inhibitor, other solvents of higher boiling point and wetting agents. In resin-free products, the carboxylic acid is selected from materials which are molten at wave soldering temperatures of approximately 250°C, are easily decomposed or volatilised and have low water solubility. As a consequence of this, many formulations make use of acids such as adipic acid and succinic acid. Hitherto, it has been conventional to use in inert gas wave soldering the same carboxylic acid activators as in conventional wave soldering and to accept in inert gas wave soldering the shortcomings the carboxylic acid activators have been found to possess.

For example, fluxes containing such conventional activators generally produce flux residues. However, if the amount of flux used is reduced to reduce the residue produced, the corresponding reduction in soldering activity often means that efficient soldering cannot be effected.

Moreover, although one general advantage of wave soldering under an inert gas atmosphere is that, under nitrogen, the solder has a higher surface tension resulting in better filling of solder joints, due to surface tension effects at the solder drainage point at the wave exit, small solder balls can be formed. If the solder resist has weakened, these can adhere to the board and this is generally to be avoided.

Embodiments of the present invention aim to provide an activator for use in inert gas wave soldering fluxes which provides enhanced activation over conventional activators of such fluxes without generating unacceptable flux residues.

According to one aspect of the present invention, there is provided a flux composition which is a solution in a $C_{1-3}$ aliphatic alcohol or alcohol mixture of 0.1 to 20% by weight of a carboxylic acid which melts at a temperature in the range of from 75 to 250°C, preferably 110 to 200°C and which thermally decomposes and/or volatilises at wave soldering temperatures of 230 to 260°C, to leave neutral residues, the carboxylic acid having low water solubility and being selected from

(i) α-unsaturated carboxylic acids of general formula:

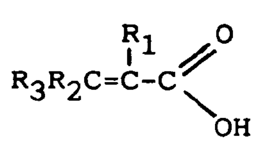

(ii) carboxylic acids containing conjugated double bonds and of general formula:

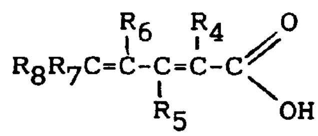

and

(iii) aromatic carboxylic acids of general formula:

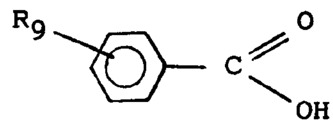

wherein $R_1$, $R_2$, $R_3$, $R_4$, $R_5$, $R_5$, $R_7$, $R_5$ and $R_9$ denote H, alkyl, cycloalkyl, heterocyclic, aryl, heterocyclic aromatic, $OR_{10}$, $NR_{11}R_{12}$, or $CO_2R_{13}$ wherein $R_{10}$, $R_{11}$, $R_{12}$ and $R_{13}$ independently of one another are H, alkyl, cycloalkyl, heterocyclic, aryl or heterocyclic aromatic. Where any one of groups $R_1$ to $R_{13}$ is an alkyl group, it is preferably $C_{1-4}$ alkyl. Where any one of groups $R_1$ to $R_{13}$ is an aryl group it is preferably phenyl or phenyl substituted by for example $C_{1-4}$ alkyl or alkoxy, hydroxyl or amino.

In a second aspect, this invention provides a method of mass producing PCBs utilising a wave soldering process, wherein the wave soldering is conducted in a substantially oxygen-free inert atmosphere on PCBs to which there has been applied, prior to contacting with the solder wave a flux composition according to the first aspect of this invention.

In a third aspect, the invention provides for the use in the production of a flux composition for use in a wave soldering process carried out under a substantially oxygen-free inert atmosphere, which flux composition comprises a $C_{1-3}$ aliphatic alcohol or alcohol mixture, of a carboxylic acid which melts melts at a temperature in the range of from 75 to 250°C, preferably 110 to 200°C and which thermally decomposes and/or volatilises at wave soldering temperatures of 230 to 260°C, to leave neutral residues, the carboxylic acid having low water solubility, which carboxylic acid is selected from

(i) α-unsaturated carboxylic acids of general formula:

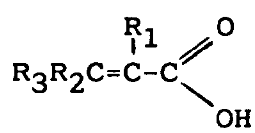

(ii) carboxylic acids containing conjugated double bonds and of general formula:

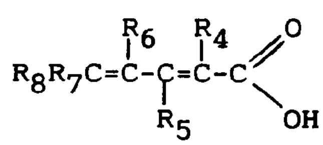

and

(iii) aromatic carboxylic acids of general formula:

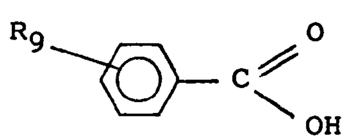

wherein $R_1$, $R_2$, $R_3$, $R_4$, $R_5$, $R_5$, $R_7$, $R_5$ and $R_9$ independently of one another represent H, alkyl, cycloalkyl, heterocyclic, aryl, heterocyclic aromatic, $OR_{10}$, $NR_{11}R_{12}$, or $CO_2R_{13}$ wherein $R_{10}$, $R_{11}$, $R_{12}$ and $R_{13}$ indepen-

dently of one another are H, alkyl, cycloalkyl, heterocyclic, aryl or heterocyclic aromatic.

The acid activators proposed herein are generally known compounds which have not hitherto been proposed for use in soldering fluxes. Indeed, generally, the compounds do not perform particularly well as activators in conventional wave soldering processes. In contrast, when evaluations were repeated on a nitrogen-inerted wave soldering machine, soldering performance was excellent whether tests were carried out on boards which were tin/lead coated or copper boards with and without resin coatings.

The flux compositions of the invention contain 0.1 to 20 weight % of activator, preferably 1 to 8 % and more preferably 3 - 6 % by weight of the activator. The composition optionally additionally contains 0.1 to 5 % by weight of a natural resin, such as colophony or a synthetic resin such as, for example, pentaerythritol esters. The composition may additionally contain a copper corrosion inhibitor such as benzotriazole in an amount of 0.1 to 0.5 % by weight. These components are all dissolved in the $C_{1-3}$ alcohol or alcohol mixture. Preferably the alcohol is isopropanol although methanol and/or ethanol may also be employed. Additionally cosolvents such as ketones, for enhancing the solubility of the activator, may be employed.

The activators to be used in fluxes embodying this invention fall into three classes whose members show surprising soldering activity in an inert gas wave soldering process compared with the same process but carried out in air. Moreover, there is a much lower incidence of solder ball deposition on a PCB in an inert gas wave soldering process compared with use of conventional carboxylic acid flux activators such as adipic acid. In general, the fluxes perform well as very low residue products whose use does not lead to a need for cleaning of the PCBs and meet the requirements of IPC-SF-818 flux specification as class L3 CN. As the experiments which follow will show, various flux residue test requirements are met without the need for a cleaning process.

The monounsaturated compounds of the type (i) activators are exemplified by fumaric acid of formula

$$HOOC-CH=CH-COOH$$

and cinnamic acid of formula

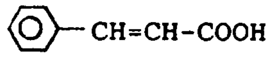

of which the trans isomer which is readily available commercially is particularly effective.

The dienically unsaturated compounds of type (ii) are exemplified by sorbic acid of formula

$$CH_3-CH=CH-CH=CH-COOH$$

The aromatic carboxylic acids of type (iii) are exemplified by benzoic acid, o-salicylic acid and p-anisic acid respectively of formula

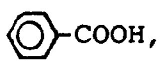, 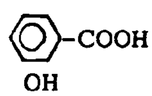 and 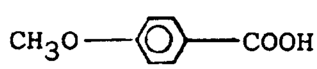

In the practice of the present invention, the flux will generally be applied by spraying, this being the normal method application of flux in inert gas wave soldering machines. However, some fluxes in accordance with the present invention may be applied by foam fluxers and/or wave fluxers. Some fluxes in accordance with this invention can provide a satin finish at the soldered joints which is itself an advantage in assisting in visual inspection of solder joints.

The term "substantially oxygen-free inert atmosphere" is used herein to denote an inert atmosphere, e.g. nitrogen, containing less than 1000 ppm oxygen, preferably less than 100 ppm oxygen.

In some circumstances, the flux may be used in an inert atmosphere, e.g. nitrogen, to which a reactive component, e.g. formic acid, has been added.

Flux compositions embodying the invention which have been prepared are given by way of example only in the following.

All values given are for percentages by weight of the components in the respective flux compositions

Example 1

| | |
|---|---|
| Sorbic Acid | 3.2 |
| Isopropanol | 96.8 |

Example 2

| | |
|---|---|
| Adipic Acid | 0.70 |
| Sorbic Acid | 2.50 |
| Isopropanol | 96.80 |

Example 3

| | |
|---|---|
| Benzoic Acid | 3.49 |
| Isopropanol | 96.51 |

Example 4

| | |
|---|---|
| Benzoic Acid | 3.5 |
| Isopropanol | 96.3 |
| Benzotriazole | 0.2 |

Example 5

| | |
|---|---|
| Fumaric Acid | 1.65 |
| Isopropanol | 98.35 |

Example 6

| | |
|---|---|
| Trans-Cinnamic Acid | 4.22 |
| Isopropanol | 95.78 |

Example 7

| | |
|---|---|
| Trans-Cinnamic Acid | 4.2 |
| Isopropanol | 95.6 |
| Benzotriazole | 0.2 |

Example 8

| | |
|---|---|
| p-Anisic Acid | 4.34 |
| Ethanol | 85.66 |
| Acetone | 10.00 |

Example 9

| | |
|---|---|
| p-Anisic Acid | 3.3 |
| Ethanol | 91.0 |
| Acetone | 5.7 |

Example 10

| | |
|---|---|
| p-Anisic Acid | 3.3 |
| Ethanol | 90.8 |
| Acetone | 5.7 |
| Benzotriazole | 0.2 |

Example 11

| | |
|---|---|
| o-Salicylic Acid | 3.94 |
| Isopropanol | 96.06 |

Example 12

| | |
|---|---|
| p-Anisic Acid | 2.17 |
| o-Salicylic Acid | 1.97 |
| Acetone | 5.0 |
| Ethanol | 42.83 |
| Isopropanol | 48.03 |

Example 13

| | |
|---|---|
| Adipic Acid | 1.50 |
| o-Salicylic Acid | 1.75 |
| Isopropanol | 91.55 |
| Benzotriazole | 0.20 |
| Dibasic Esters | 5.00 |

Comparative Example

For comparative purposes, there was made up a flux composition consisting of 2 % adipic acid in 98 % isopropanol (both percentages expressed on a weight basis).

Various groups of flux compositions as described hereinabove were utilised in tests to show the effectiveness of flux compositions embodying this invention

Experiment 1 -

Copper Corrosion Test According to IPC-SF-818 Copper coupons were etched according to IPC-SF-818. Approximately 0.035 g of the flux in non volatile form (obtained by heating an aliquot of the flux to dryness at 85°C) was placed in the depression of the coupon and 1 g of 60/40 16 SWG solid wire were positioned on top. Coupons thus treated were reflowed on a solder bath at 235°C in (i) air and (ii) nitrogen (20 ppm oxygen) for five seconds. The prepared test pieces for anaerobic reflow were stored in a glove box while purging prior to reflow.

After reflow, all test pieces were examined for evidence of blue-green discolouration prior to placing in a humidity chamber at 40°C, 90 % relative humidity for ten days, after which time they were again examined. The results obtained are set out in the following Table 1:

Table 1

| Flux of Example | Aerobic Reflow | | Nitrogen Reflow | |
|---|---|---|---|---|
| | Initial | Aged (10 days) | Initial | Aged (10 days) |
| 9 | Fairly heavy blue-green ring at edge | Fairly heavy blue-green ring at edge | No visible discolouration | No visible discolouration |
| 6 | Fairly heavy blue-green ring at edge | Fairly heavy blue-green ring at edge | " | " |
| 3 | No visible discolouration | No visible discolouration | " | " |
| 10 | Faint pale green ring at edge | Faint pale green ring at edge | " | " |
| 7 | Faint pale green ring at edge | Faint pale green ring at edge | " | " |
| 4 | No visible discolouration | No visible discolouration | " | " |

Experiment 2 -

Copper mirror test according to IPC-SF-818 One drop of each of the test fluxes was placed on a pre-cleaned copper mirror which was then stored in a humidity chamber at 25°C, 50 % relative humidity for twenty four hours. On removal from the chamber, the residues were rinsed off and the mirror was examined against a white background for evidence of copper removal. The results obtained are shown in the following Table 2.

Table 2

| Flux of Example | Observation |
|---|---|
| 9 | No visible attack |
| 6 | No visible attack |
| 3 | No visible attack |
| 10 | No visible attack |
| 7 | No visible attack |
| 4 | No visible attack |

Experiment 3 -

Surface Insulation Resistance Test According to Bellcore TR-NWT-00078

Six test combs were each fluxed with 0.1 ml of flux and passed through a Soltec inert gas wave soldering machine under nitrogen, three combs face up and three face down. Wave soldering conditions were:-

| | |
|---|---|
| conveyor speed | 1.5 m/min |
| preheat temperature | 400°C (100°C topside) |
| wave height | 300 |
| solder temperature | 250°C |
| oxygen level | 50 ppm |

Nitrogen flow rates:-

Diffuser 1 26 $m^3/h$
Diffuser 2 26 $m^3/h$
Diffuser 3 18 $m^3/h$
Backplate 7 $m^3/h$

Three unfluxed control combs were also passed through the system in the face-up position.

Leads were attached to all combs which were then placed in a humidity chamber at 35°C, 85 % relative humidity. Initial readings were made at 100V DC after 24 hours and each comb connected to a bias of 50V DC for 96 hours, after which period final readings were taken under the conditions.

The results obtained are shown in the following Table 3:

Table 3

| Flux of Example | Group | Initial SIR (Ohms) | Aged SIR (Ohms) |
|---|---|---|---|
| Unfluxed | Unsoldered | $6.30 \times 10^{11}$ | $1.82 \times 10^{12}$ |
| Comparative | Unsoldered | $1.99 \times 10^{10}$ | $1.92 \times 10^{10}$ |
| | Soldered | $4.98 \times 10^{10}$ | $7.33 \times 10^{10}$ |
| 9 | Unsoldered | $1.02 \times 10^{12}$ | $1.81 \times 10^{12}$ |
| | Soldered | $4.57 \times 10^{11}$ | $4.60 \times 10^{11}$ |
| 6 | Unsoldered | $1.56 \times 10^{12}$ | $1.69 \times 10^{12}$ |
| | Soldered | $1.46 \times 10^{12}$ | $1.28 \times 10^{12}$ |
| 3 | Unsoldered | $9.33 \times 10^{11}$ | $1.35 \times 10^{12}$ |
| | Soldered | $7.90 \times 10^{11}$ | $1.13 \times 10^{12}$ |

Experiment 4 -

Resist Compatibility Test

Pieces of circuit board of dimensions 90 x 150 mm (with between 300 and 500 solder joints) were selected for a number of common resists. These were brush fluxed with each of six development products and the flux of the Comparative Example and passed through the inerted Soltec wave soldering machine under the conditions described for surface insulation resistance testing. Testing was repeated for two different Pb/Sn coated boards and a wider range of fluxes.

All soldered boards were visually assessed with the naked eye for defects with emphasis on solder balling. The results obtained are shown in the following Tables 4 and 5. The numbers of balls is governed by the choice of resist and flux.

Table 4

Resist Compatibility - Solder Ball Production

| | EXAMPLE NUMBER | | | | | | |
|---|---|---|---|---|---|---|---|
| RESIST TYPE | Comparative | 9 | 10 | 6 | 7 | 3 | 4 |
| Dynachem Epic Liquid photoimageable | 107 | 38 | 26 | 28 | 30 | 46 | 50 |
| Dynachem Conformask 1000 aqueous photoimageable | 125 | 51 | 86 | 27 | 25 | 20 | 53 |
| Coates XZ15 two pack epoxy | 102 | 23 | 102 | 23 | 63 | 36 | 29 |
| Dynachem FMX dry film | 63 | 27 | 56 | 28 | 63 | 34 | 34 |
| Dynachem DM dry film | 159 | 84 | 74 | 60 | 58 | 32 | 27 |
| Dynachem KM dry film | 82 | 26 | 42 | 33 | 58 | 20 | 38 |
| Probimer 52 epoxy photoimageable | 220 | 180 | 154 | 75 | 130 | 147 | 90 |
| Tamura DSR 2200 C7 dry film | 53 | 17 | 17 | 28 | 81 | 8 | 20 |

Table 5

| Relative Number of Solder Balls Produced During $N_2$ Atmosphere Wave Soldering | | |
|---|---|---|
| Example | Sn/Pb Coated Boards (A) | Sn/Pb Coated Boards (B) |
| Comparative | 156 | 128 |
| Example 1 | 58 | 44 |
| Example 2 | 81 | - |
| Example 5 | - | 148 |
| Example 6 | - | 63 |
| Example 8 | 83 | 83 |
| Example 11 | 79 | 102 |
| Example 13 | 110 | - |

The various experiments indicate that fluxes which conform to accepted specifications (e.g. IPC-SF-818 10-day copper corrosion test) have been developed for use in nitrogen wave soldering which show significant advantages over adipic acid in alcohol which has conventionally been used.

## Claims

1. A flux composition which is a solution in a $C_{1-3}$ aliphatic alcohol or alcohol mixture of 0.1 to 20% by weight of a carboxylic acid which melts at a temperature in the range of from 75 to 250°C, preferably 110 to 200°C and which thermally decomposes and/or volatilises at wave soldering temperatures of 230 to 260°C, to leave neutral residues, the carboxylic acid having low water solubility and being selected from
(i) α-unsaturated carboxylic acids of general formula:

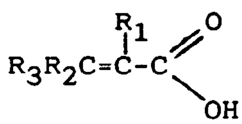

(ii) carboxylic acids containing conjugated double bonds and of general formula:

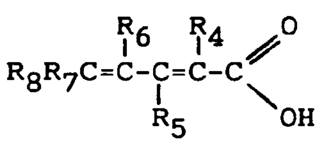

and
(iii) aromatic carboxylic acids of general formula:

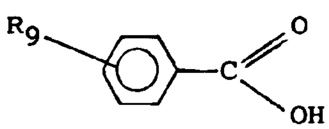

wherein $R_1$, $R_2$, $R_3$, $R_4$, $R_5$, $R_6$, $R_7$, $R_8$ and $R_9$ denote H, alkyl, cycloalkyl, heterocyclic, aryl, heterocyclic aromatic, $OR_{10}$, $NR_{11}R_{12}$, or $CO_2R_{13}$ wherein $R_{10}$, $R_{11}$, $R_{12}$ and $R_{13}$ independently of one another are

H, alkyl, cycloalkyl, heterocyclic, aryl or heterocyclic aromatic.

**2.** A flux composition as claimed in claim 1, wherein the carboxylic acid activator is present in an amount of from 1 to 8%, preferably 3 - 6% by weight.

**3.** A flux composition as claimed in claim 1 or 2, which additionally contains from 0.1 to 5% by weight of a natural resin or a synthetic resin.

**4.** A flux composition as claimed in claim 3, wherein a said natural resin is colophony and a said synthetic resin is a pentaerythritol ester.

**5.** A flux composition as claimed in any preceding claim which additionally contains 0.1 to 0.5 % by weight of a copper corrosion inhibitor.

**6.** A flux composition as claimed in claim 5, wherein the copper corrosion inhibitor is benzotriazole.

**7.** A flux composition as claimed in any preceding claim, wherein the carboxylic acid is selected from:
i) fumaric acid, cinnamic acid;
ii) sorbic acid, and
iii) benzoic acid, o-salicylic acid, p-anisic acid.

**8.** A method of mass producing PCBs utilising a wave soldering process, wherein the wave soldering is conducted in a substantially oxygen-free inert atmosphere on PCBs to which there has been applied, prior to contacting with the solder wave a flux composition according to any preceding claim.

**9.** A method according to claim 8, wherein wave soldering is carried out in an inert atmosphere to which formic acid has been added.

**10.** The use in the production of a flux composition for use in a wave soldering process carried out under a substantially oxygen-free inert atmosphere, which flux composition comprises a $C_{1-3}$ aliphatic alcohol or alcohol mixture, of a carboxylic acid which melts at a temperature in the range of from 75 to 250°C, preferably 110 to 200°C and which thermally decomposes and/or volatilises at wave soldering temperatures of 230 to 260°C, to leave neutral residues, the carboxylic acid having low water solubility, which carboxylic acid is selected from
(i) α-unsaturated carboxylic acids of general formula:

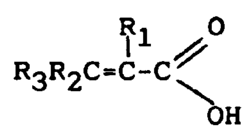

(ii) carboxylic acids containing conjugated double bonds and of general formula:

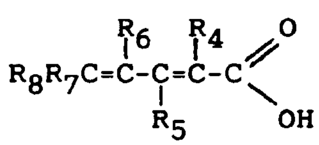

and
(iii) aromatic carboxylic acids of general formula:

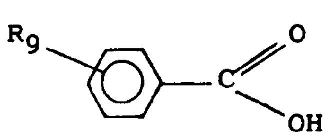

wherein $R_1$, $R_2$, $R_3$, $R_4$, $R_5$, $R_6$, $R_7$, $R_8$ and $R_9$ independently of one another represent H, alkyl, cycloalkyl, heterocyclic, aryl, heterocyclic aromatic, $OR_{10}$, $NR_{11}R_{12}$, or $CO_2R_{13}$ wherein $R_{10}$, $R_{11}$, $R_{12}$ and $R_{13}$ independently of one another are H, alkyl, cycloalkyl, heterocyclic, aryl or heterocyclic aromatic.

European Patent Office

# EUROPEAN SEARCH REPORT

Application Number
EP 94 30 1816

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | AT-B-392 231 (ALCATEL AUSTRIA)<br>* the whole document * | 1-4,7 | B23K35/363<br>B23K1/08<br>//B23K101:42 |
| X | DATABASE WPI<br>Week 8650,<br>Derwent Publications Ltd., London, GB;<br>AN 86-331301<br>& SU-A-1 228 999 (A.I.SMIRNOV) 5 July 1986<br>* abstract * | 1,3,7 | |
| X | CHEMICAL ABSTRACTS, vol. 110, no. 12, 20 March 1989, Columbus, Ohio, US;<br>abstract no. 99948,<br>MUELLER, WOLFGANG ET AL 'Solderability of gold-electrodeposited nickel electroplates'<br>* abstract *<br>& SCHWEISSTECHNIK (BERLIN) (1988), 38(10), 454-6 CODEN: SCTCA9;ISSN: 0036-7192, 1988 | 1,3,7 | |
| A | EP-A-0 329 212 (INTERFLUX ELECTRONICS) | | TECHNICAL FIELDS SEARCHED (Int.Cl.5) |
| A | US-A-5 121 875 (L.J.HAGERTY ET AL) | | B23K |
| A | CHEMICAL ABSTRACTS, vol. 83, no. 2, 14 July 1975, Columbus, Ohio, US;<br>abstract no. 14843,<br>VVEDENSKII, N. V. ET AL 'Flux for soldering with soft solders'<br>* abstract *<br>& SU-A-449 794 (VVEDENSKII, N. V.;GUSAKOVA, G. S.; KONDRATOVICH, G. A.; SOKOLOVA, G. V) | | |

The present search report has been drawn up for all claims

| Place of search | Date of completion of the search | Examiner |
|---|---|---|
| THE HAGUE | 2 August 1994 | Mollet, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)